# EUROPÄISCHE PATENTSCHRIFT

(11) **EP 3 732 330 B1**
(45) Veröffentlichungstag und Bekanntmachung des Hinweises auf die Patenterteilung: **26.01.2022**
(21) Anmeldenummer: 18833231.6
(22) Anmeldetag: 21.12.2018
(51) Int. Cl.: E01B 29/05, E01B 29/06, B61D 15/00, B61D 47/00, B65F 1/00, B65G 7/12, B61D 3/02, B61D 3/10, B61D 3/16, B65G 67/22

(54) **SCHWELLENTRANSPORTFAHRZEUG**
SLEEPER TRANSPORT VEHICLE
VÉHICULE DE TRANSPORT DES TRAVERSES DE CHEMIN DE FER

(30) Priorität: 28.12.2017 AT 5012017
(43) Veröffentlichungstag der Anmeldung: 04.11.2020
(73) Patentinhaber: Plasser & Theurer Export von Bahnbaumaschinen GmbH, 1010 Wien (AT)
(72) Erfinder: LINTZ, Gerard, 57800 Bening les Saint Avold (FR)
(86) Internationale Anmeldenummer: PCT/EP2018/086467
(87) Internationale Veröffentlichungsnummer: WO 2019/129678

(56) Entgegenhaltungen:
- EP-A1- 2 412 598
- WO-A1-2012/156408
- FR-A1- 2 931 777
- JP-A- 2003 147 703
- RU-C1- 2 377 355

## Beschreibung

### Gebiet der Technik

Die Erfindung betrifft ein Schwellentransportfahrzeug, umfassend einen Ladebereich, der eine untere tragende Ladeebene und eine obere tragende Ladeebene aufweist, wobei in jeder Ladeebene eine Führung angeordnet ist, in der Paletten in Längsrichtung des Schwellentransportfahrzeugs geführt sind, wobei an einer Stirnseite ein Übergabebereich angeordnet ist, in welchen die Führungen hineinragen, um in einem Arbeitseinsatz Paletten mit neuen Schwellen in einer Ladeebene an ein stirnseitig angeordnetes weiteres Schwellentransportfahrzeug oder Belade-/Entladefahrzeug weiterzugeben sowie Paletten mit alten Schwellen in der anderen Ladeebene aufzunehmen. Außerdem betrifft die Erfindung ein Verfahren zur Bereitstellung neuer Schellen bzw. zur Aufnahme alter Schwellen mittels eines Schwellentransportfahrzeugs.

### Stand der Technik

Aktuell werden Verlegezüge für einen Schwellenaustausch über Schwellenwagons mit Neuschwellen versorgt. Seitlich sind an den Schwellenwagons Kranschienen angeordnet, auf denen ein Portalkran verfährt. Zwischen den Schwellenwagons werden Verbindungsstücke benötigt, um ein Verfahren von einem Wagon auf den nächsten zu ermöglichen. Durch die Verbindungsstücke wird nicht nur die Bewegungsfreiheit in einer Kurve stark eingeschränkt, auch ein Bediener für den Portalkran wird benötigt. Eine Automatisierung ist hier nur schwer realisierbar. Außerdem entsteht bei einem Einsatz mehrerer Portalkräne ein hohes Kollisionsrisiko welchem entgegen gewirkt werden muss.

Aus der JP 2003147703 A ist ein Schwellentransportfahrzeug bekannt, welches zwei Ladeebenen und endseitig eine Hubvorrichtung aufweist. Hierbei werden Paletten mit Neuschwellen beladen, welche an einer Entladestelle über eine von einem Bediener gesteuerte Abwurfvorrichtung gekippt und dadurch neben einem Gleis abgeworfen werden. Aufgrund des Abladens neben dem Gleis ist diese Lösung nicht für einen im Fließbandverfahren arbeitenden Verlegezug geeignet.

Die WO 2012/156408 A1 zeigt ein System zum gleisgebundenen Transport von Gegenständen wie beispielsweise Schwellen. Dieses System umfasst schienengebundene Transportfahrzeuge, auf welchen in zwei Ebenen die zu transportierenden Gegenständen in Containern gelagert werden. Mehrere dieser Transportfahrzeuge bilden einen Zug, wobei an den jeweiligen Wagenenden Übergabebereiche vorhanden sind.

### Zusammenfassung der Erfindung

Der Erfindung liegt die Aufgabe zugrunde, für ein Schwellentransportfahrzeug der eingangs genannten Art eine Verbesserung gegenüber dem Stand der Technik anzugeben. Zudem betrifft die Erfindung ein Verfahren zum Betreiben eines Schwellentransportfahrzeugs.

Bezüglich der Vorrichtung wird die gestellte Aufgabe erfindungsgemäß durch die Merkmalskombination gemäß Anspruch 1 gelöst. Die auf ein Verfahren gerichtete Aufgabe wird erfindungsgemäß durch die Merkmalskombination gemäß Anspruch 12 gelöst. Abhängige Ansprüche geben vorteilhafte Ausgestaltungen der Erfindung an.

Die Erfindung sieht vor, dass in jeder Ladeebene eine Schiebeeinrichtung zum Schieben der Paletten entlang der Führungen angeordnet ist. Die jeweilige Schiebeeinrichtung ist als zumindest eine in den Übergabebereich hineinragende, umlaufende Kette ausgebildet, wobei an den Paletten Koppelelemente zur vorübergehenden Kopplung mit der Kette angeordnet sind. Die umlaufende Kette stellt eine zuverlässige Lösung für ein Verschieben der Paletten auf einer der Ladeebene dar. Die Koppelelemente werden einfach in einem benötigten Abstand an der Kette positioniert.

Zudem ist es sinnvoll, wenn in jeder Ladeebene beidseits einer längsverlaufenden Symmetrieachse jeweils eine umlaufende Kette angeordnet ist. Durch einen Einsatz von zwei umlaufenden Ketten pro Ladeebene wird eine auf die Paletten wirkende Verschiebekraft gleichmäßig aufgeteilt. Durch ein beidseitiges Verschieben wird einem Verkeilen der Paletten in den Führungen entgegen gewirkt.

In einer vorteilhaften Ausprägung ist die jeweilige Führung als Längsprofil ausgebildet und an den Paletten sind Führungsrollen zur Führung entlang des Längsprofils angeordnet. Durch ein Abrollen der Paletten über die Führungsrollen in den Längsprofilen ist eine reibungsarme Führung der Palette gewährleistet.

Für ein reibungsarmes Verschieben der Paletten ist es vorteilhaft, wenn jede Palette an ihrer Unterseite Längsauflagen zum Aufliegen auf einem Rollengang umfasst. Dabei sind die Paletten sehr robust und einfach aufgebaut. Zudem sind sie wartungsfrei, weil alle beweglichen Teile (Lager, Rollen) am Fahrzeug angeordnet sind.

Dabei ist es günstig, wenn in jeder Ladeebene eine mittig verlaufende Führung und beidseits dieser Führung jeweils ein Rollengang angeordnet sind. Durch die mittig verlaufende Führung wird die jeweilige Palette präzise auf der Symmetrieachse der Ladeebene geführt und die Gewichtsbelastung teilt sich gleichmäßig auf beide Rollengänge auf.

Vorteilhafterweise ist jeder Palette eine Verriegelungseinrichtung zur vorübergehenden Fixierung während einer Transportfahrt zugeordnet. Dadurch werden die Paletten samt den Schwellen bei Fahrten zu bzw. von einer Baustelle sicher in Position gehalten.

Bei einer weiteren günstigen Ausgestaltung der Erfindung umfasst das Transportfahrzeug einen Wagenrahmen, der auf Drehgestellen abgestützt ist, wobei zumindest ein Drehgestell als Triebdrehgestell ausgebildet ist. Dadurch wird ein selbständiges Verfahren des Transportfahrzeuges erreicht was sich vorteilhaft auf eine Automatisierung des Arbeitseinsatzes auswirkt.

Zudem ist es sinnvoll, wenn das Transportfahrzeug an beiden Längsseiten Verkleidungselemente aufweist. Sollten die Schwellen innerhalb der Palette seitlich verrutschen werden diese trotzdem sicher innerhalb des Schwellentransportfahrzeuges und somit im Lichtraumprofil gehalten.

Eine vorteilhafte Weiterbildung der Erfindung sieht vor, dass das Transportfahrzeug oberhalb der oberen Ladeebene eine tragende Förderebene aufweist, in der zumindest ein Längsförderband zum Transport von Schüttgut angeordnet ist. Dadurch kann zusätzlich bei einem Schwellenaustausch auch Schüttgut zu- bzw. abgeführt werden.

In einer vorteilhaften Ausprägung ist an der dem Übergabebereich gegenüberliegenden Stirnseite eine Hebe-/Senkvorrichtung zum Heben bzw. Senken einer Palette von einer Ladeebene in die andere Ladeebene angeordnet. Dadurch wird beim Entladen von Neuschwellen bzw. beim Beladen mit Altschwellen ein Weitertransport der Paletten über beide Ladeebenen hinweg ermöglicht. Auf diese Weise sind beide Ladeebenen für eine Neuschwellenanlieferung bzw. einen Altschwellenabtransport nutzbar.

Eine weitere Steigerung der Ladekapazität wird vorteilhafterweise dadurch erreicht, dass das Transportfahrzeug wenigstens zwei Wagenrahmen umfasst, die gelenkig miteinander verbunden sind, dass jedem Wagenrahmen ein eigener Ladebereich zugeordnet ist und dass die Ladebereiche mit einem Übergabebereich gekoppelt sind, in welchen die jeweiligen Führungen und die jeweiligen Schiebeeinrichtungen hineinragen, um die Paletten über beide Ladebereiche hinweg in Längsrichtung weiterzuschieben. Durch eine solche gelenkige Aneinanderreihung mehrerer Wagenrahmen kann die Ladekapazität flexibel angepasst werden. Die maximale Länge der Wagenrahmen ist dabei durch einen durchfahrbaren Mindestgleisradius und ein einzuhaltendes Lichtraumprofil vorgegebenen.

Das erfindungsgemäße Verfahren zur Bereitstellung neuer Schellen bzw. zur Aufnahme alter Schwellen mittels eines Schwellentransportfahrzeugs sieht vor, dass im Übergabebereich die in der einen Ladeebene weitergeschobenen Paletten mit neuen Schwellen vom Schwellentransportfahrzeug an das Belade-/Entladefahrzeug übergeben werden und dass in der anderen Ladeebene Paletten mit alten Schwellen vom Belade-/Entladefahrzeug an das Schwellentransportfahrzeug übergeben werden. Auf diese Weise erfolgt eine fließbandmäßige Versorgung mit Neuschwellen bzw. ein ebensolcher Abtransport von Altschwellen.

In einer günstigen Weiterbildung des Verfahrens werden mittels einer an der dem Übergabebereich gegenüberliegenden Stirnseite angeordneten Hebe-/Senkvorrichtung Paletten von einer Ladeebene in die andere Ladeebene gehoben bzw. abgesenkt. Damit werden beide Ladeebenen in eine rotationsmäßige Versorgung mit Neuschwellen bzw. Aufnahme von Altschwellen einbezogen. Die Paletten bewegen sich dabei auf den Ladeebene in entgegengesetzten Richtungen, wobei mittels der Hebe-/Senkvorrichtung eine Weitergabe zwischen den Ladeebenen erfolgt.

Dabei ist es sinnvoll wenn das Schwellentransportfahrzeug während einer Palettenübergabe gemeinsam mit dem Belade-/Entladefahrzeug mit einer vorgegebenen Arbeitsgeschwindigkeit entlang eines Gleises bewegt wird, dessen Schwellen mittels einer Schellentauschvorrichtung getauscht werden. Auf diese Weise erfolgt ein kontinuierlicher Schwellenaustausch, bei dem ein Verlegezug mit gleichmäßiger Geschwindigkeit vorwärts fährt. Ein derartiger Schwellentausch im kontinuierlichen Fließbandverfahren ist besonders effektiv und kostensparend.

### Kurze Beschreibung der Zeichnungen

Die Erfindung wird nachfolgend in beispielhafter Weise unter Bezugnahme auf die beigefügten Figuren erläutert. Es zeigen in schematischer Darstellung:
- Fig. 1: Seitenansicht eines Schwellentransportfahrzeugs
- Fig. 2: Vorderansicht eines Schwellentransportfahrzeug
- Fig. 3: Draufsicht eines Schwellentransportfahrzeug
- Fig. 4: Draufsicht auf einen Übergabebereich
- Fig. 5: Vereinfachte Schrägansicht eines Übergabebereichs
- Fig. 6: Schwellentransportfahrzeug mit Hebe-/Senkvorrichtung

### Beschreibung der Ausführungsformen

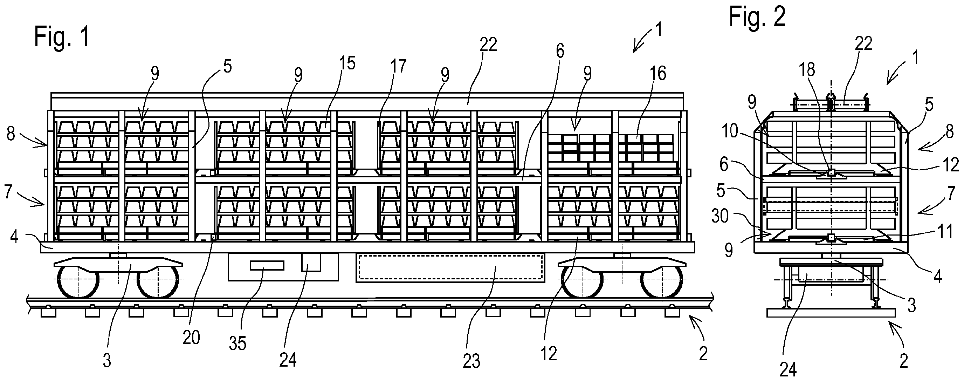

Die Figuren 1-3 zeigen verschiedene Ansichten eines Schwellentransportfahrzeug 1, welches auf einem Gleis 2 verfahrbar ist. Das Schwellentransportfahrzeug 1 umfasst einen auf Drehgestellen 3 abgestützten Wagenrahmen 4, auf dem seitliche Steher 5 und mit diesen verbundene Quer- und Längsträger 6 angeordnet sind. Mittels dieser tragenden Elemente sind eine untere tragende Ladeebene 7 und eine obere tragende Ladeebene 8 gebildet. In den Ladeebenen 7, 8 sind Paletten 9 in Längsrichtung des Schwellentransportfahrzeugs 1 entlang einer Führung 10 mittels einer Schiebeeinrichtung 11 verschiebbar.

Jede Palette 9 umfasst einen Trägerrahmen 12, welcher auf Längsauflagen 13 abgestützt ist. Die Längsauflagen 13 sind vorteilhafterweise kufenartig ausgebildet und liegen auf Rollengängen 14 der jeweiligen Ladeebene 7,8 auf. Der Trägerrahmen 12 ist zur Aufnahme von Schwellen 15,16 in mehreren übereinander angeordneten Lagen ausgebildet. Fig. 1 zeigt ein Schwellentransportfahrzeug 1, auf dem sieben Paletten mit neuen Schwellen 15 und bereits eine Palette mit alten Schwellen 16 beladen ist. Bei diesem beispielhaften Beladezustand wurde bereits eine Palette 9 mit neuen Schwellen 15 weitergegeben und die Palette 9 mit alten Schwellen 16 aufgenommen.

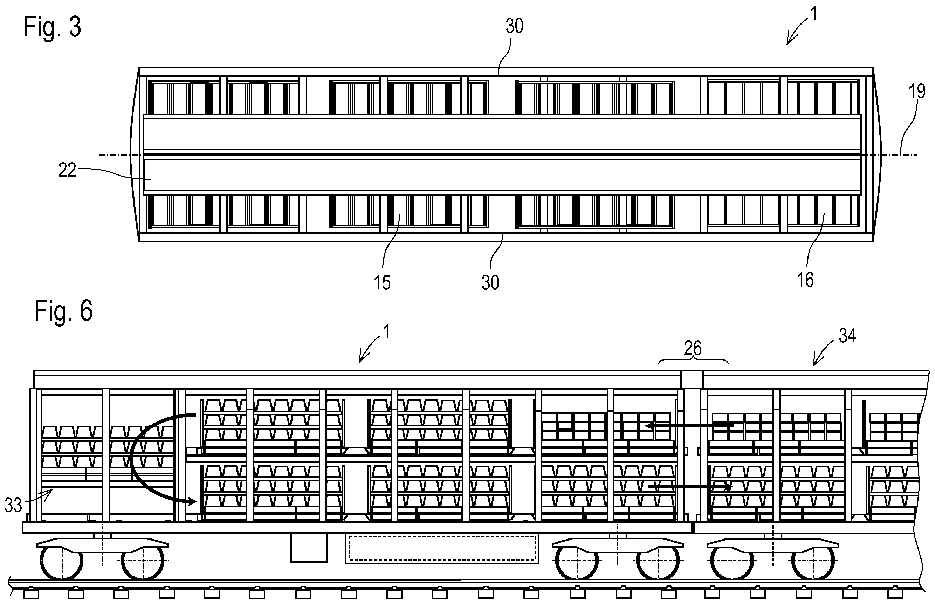

Um ein Verrutschen der Schwellen 15, 16 in Fahrtrichtung zu verhindern, umfasst jede Palette 9 vorne und hinten Begrenzungen 17, die bis zur obersten Lage der Schwellen 15, 16 reichen. Mittels zweier Führungsrollen 18 ist die jeweiligen Palette 9 in der als Längsprofil ausgebildeten Führung 10 geführt. Konkret ist in jeder Ladeebene 7, 8 eine Nut in einer längsverlaufenden Symmetrieachse 19 des Schwellentransportfahrzeugs 1 angeordnet. Um ein seitliches Verschieben von Schwellen 15, 16 zu verhindern, sind an beiden Längsseiten des Schwellentransportfahrzeugs 1 Verkleidungselemente 30 angeordnet. Diese sind in Fig. 1 und 6 nicht dargestellt, um den inneren Aufbau sichtbar zu machen.

In jeder Ladeebene 7, 8 sind als Schiebeeinrichtung 11 zum Schieben der Paletten 9 entlang der Führung 10 zwei in einer horizontalen Ebene umlaufende Ketten mit Koppelelementen 20 vorgesehen. Die Ketten sind beidseits der Symmetrieachse 19 angeordnet und weisen im Betrieb eine gegengleiche Umlaufrichtung auf. Der jeweils äußere Kettenstrang ist dabei vorübergehend mit den auf der entsprechenden Ladeebene 7, 8 befindlichen Paletten 9 gekoppelt und schiebt diese vorwärts.

Zusätzlich ist jede Palette 9 mit einer ferngesteuert lösbaren Verriegelungsvorrichtung 21 ausgestattet, welche zur Fixierung der Paletten 9 während einer Transportfahrt ausgelegt ist. Diese kann beispielhaft als Verriegelungsbolzen ausgebildet sein, der die jeweilige Palette 9 sicher fixiert. In einer anderen Variante werden die zwei umlaufenden Ketten in Längsrichtung blockiert, um alle Paletten 9 mittels der Koppelelemente 20 in ihrer Position zu fixieren.

Oberhalb der oberen Ladeebene 8 befinden sich zusätzlich zwei Längsförderbänder 22 zum Transport von Schüttgut. Somit können ein gleichzeitiges Zubringen von Neuschotter und ein Abtransport von Altschotter erfolgen. Der Altschotter wird beispielsweise in einen an den Fahrzeugverbund angrenzenden Containerwagen abgeworfen.

Unterhalb des Wagenrahmens 4 ist eine Versorgungseinheit 23 positioniert. Diese dient sowohl zur Energieversorgung diverser Antriebe 24 für die umlaufenden Ketten, die Längsförderbänder 22 und gegebenenfalls für ein als Triebdrehgestell ausgebildetes Drehgestell 3. Die Antriebe 24 sind zum Beispiel als Hydraulikantriebe ausgebildet, wobei die Versorgungseinheit 23 einen Motor und Hydraulikpumpen umfasst. Alternativ dazu sind elektrische Antriebe 24 vorgesehen. Die Versorgungseinheit 23 umfasst dabei eine Verbrennungsmotor-Generator-Einheit und gegebenenfalls einen Akkumulator zur Zwischenspeicherung elektrischer Energie. Zudem ist eine zentrale Steuerungseinrichtung 35 vorgesehen, um die einzelnen Bewegungsabläufe zu koordinieren.

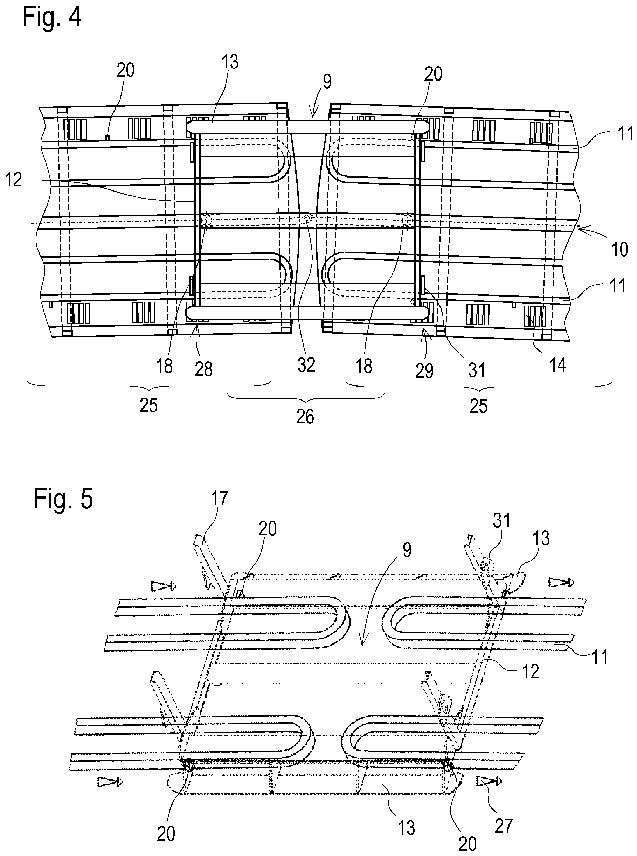

In Fig. 4 sind zwei Ladebereiche 25, die mit einem Übergabebereich 26 gekoppelt sind. Im Übergabebereich 26 erfolgt eine Übergabe der Paletten 9 von einem Ladebereich 25 zum nächsten. Die beiden Ladebereiche 25 befinden sich dabei auf zwei miteinander gelenkig verbundenen Wagenrahmen 4. Auch am Ende des Schwellentransportfahrzeugs 1 ist ein entsprechender Übergabebereich 26 zu einem Belade-/Entladefahrzeug 34 vorgesehen. Eine problemlose Palettenübergabe ist dabei auch während einer Kurvenfahrt möglich, wenn die beiden Ladebereiche 25 nicht fluchtend ausgerichtet sind.

Die jeweilige Palette 9 wird während der Übergabe durchgehend mit zumindest einer Führungsrolle 18 in einer Führung 10 geführt, weil die Führung 10 des jeweiligen Ladebereichs 25 in den Übergabebereich 26 hineinragen. Der jeweilige Ladebereich 25 ist dabei als jene Zone anzusehen, in der während eines Transports zur oder von der Baustelle Paletten 9 gelagert sind. Der jeweilige Übergabebereich 26 überschneidet sich mit Endzonen der gekoppelten Ladebereiche 25 und ist in seiner Längsausdehnung kürzer als eine Palettenlänge.

Auch die jeweilige Schiebeeinrichtung 11 ragt in den Übergabebereich 26, sodass die jeweilige Palette 9 während einer Übergabe durchgehend mit zumindest einer Schiebeeinrichtung 11 gekoppelt ist. Konkret ist bei den beispielhaft als Ketten ausgebildeten Schiebeeinrichtungen 11 der jeweils in einer Förderrichtung 27 bewegte Kettenstrang mit den Paletten 9 gekoppelt. Dabei ist der Abstand zwischen den einzelnen Koppelelementen 20 der jeweiligen Kette so gewählt, dass im Übergabebereich 26 ein gleichmäßiges Weiterschieben der Paletten 9 erfolgt. Ausgebildet sind die Koppelelemente 20 beispielsweise als Kettengliedfortsätze, die lediglich in Förderrichtung 27 an Mitnahmestellen der Paletten 9 angreifen. Dabei wird die jeweilige Palette 9 zunächst vom abgebenden Ladebereich 25 mittels am hinteren Palettenende 28 angreifenden Koppelelementen 20 in den Übergabebereich 26 geschoben. In weiterer Folge wird die Palette 9 mit am vorderen Palettenende angreifenden Koppelelementen 20 in den aufnehmenden Ladebereich 25 gezogen. Sinnvollerweise sind zusätzlich an jeder Palette 9 Pufferelemente 31 angeordnet, mittels derer eine Palette 9 von einer nachgereihten Palette 9 in Förderrichtung 27 weitergeschoben wird.

Durch die gelenkige Verbindung mehrerer Wagenrahmen 4 mittels eines jeweiligen Verbindungsgelenks 32 ist die Transportkapazität des Schwellentransportfahrzeugs 1 an eine vorliegende Baustellensituation anpassbar. Dabei ist das Schwellentransportfahrzeug 1 in einen Fahrzeugverbund integrierbar, um unterschiedliche Nutzungsvarianten abzudecken.

Ein vorteilhaftes Verfahren wird mit Bezug auf Fig. 6 erläutert. Dabei ist an einer hinteren Stirnseite des Schwellentransportfahrzeugs 1 ein Hebe-/Senkvorrichtung 33 angeordnet. Diese kann als einfache Hebebühne ausgebildet sein. An der vorderen Stirnseite ist ein Belade-/Entladefahrzeug 34 angekoppelt. Dieses umfasst ebenfalls Ladeebenen 7, 8, über die Schwellen 15, 16 zu einer nicht dargestellten Schwellenablagevorrichtung bzw. von einer Schwellenaufnahmevorrichtung befördert werden. Alternativ dazu kann eine kranartige Belade-/Entladevorrichtung direkt im Übergabebereich Neuschwellen 15 von einer unteren Palette 9 entnehmen, anschließend Altschwellen 16 auf der Palette 9 ablegen und die Palette 9 auf die obere Ladeebene 8 heben.

Zu Arbeitsbeginn sind beide Ladeebenen 7, 8 des Schwellentransportfahrzeugs 1 mit Neuschwellen 15 beladen. Das Belade-/Entladefahrzeug 34 entnimmt eine Palette 9 mit Neuschwellen 15 aus der unteren Ladeebene 7. Dabei schiebt die Schiebeeinrichtung 11 der unteren Ladeebene 7 Paletten 9 in Förderrichtung 27 nach. An der hinteren Stirnseite wird dadurch ein Palettenplatz frei. Auf diesen wird aus der oberen Ladeebene 8 eine Palette 9 mittels Hebe- und Senkvorrichtung 33 abgesenkt.

Im selben Arbeitszyklus werden Paletten 9 in der oberen Ladeebene 8 nach hinten geschoben und im Übergabebereich 26 erfolgt eine Übergabe einer mit Altschwellen 16 bestückten Palette 9 vom Belade-/Entladefahrzeug 34 auf das Schwellentransportfahrzeug 1. Der Arbeitszyklus wird wiederholt, bis beide Ladeebenen 7, 8 vollständig mit Altschwellen 16 beladen sind. Dabei kann bei Bedarf die Förderrichtung 27 auch umgekehrt sein, sodass Neuschwellen 15 von der oberen Ladeebene 8 auf das Belade-/Entladefahrzeug 34 übergeben werden.

Über Sensoren werden Bewegungen der Paletten 9 erfasst und an der zentralen Steuerungseinrichtung 35 zugeführt. Die Steuerungseinrichtung 35 ist dabei zur automatisierten Koordination der einzelnen Bewegungsabläufe eingerichtet. Während eines Arbeitseinsatzes erfolgt eine kontinuierliche Vorwärtsfahrt, die auf die Arbeitsgeschwindigkeit der Schwellenablagevorrichtung bzw. der Schwellenaufnahmevorrichtung abgestimmt ist. Auf diese Weise bewegt ich das Schwellentransportfahrzeug 1 im Verband mit einem Verlegezug entlang des Gleises 2.

Vor einem Arbeitseinsatz wird das Schwellentransportfahrzeug 1 an einem Lagerort mit Paletten 9 beladen, die mit neuen Schwellen 15 bestückt sind. Auch dieser Vorgang erfolgt sinnvollerweise nach dem beschriebenen Rotationsprinzip unter Verwendung einer stirnseitigen Hebe- und Senkvorrichtung 33. In entsprechender Weise erfolgt ein Entladevorgang nach einem Abtransport der alten Schwellen 15. Auch am Lagerort kann eine Schwellentransportfahrzeug 1 kombinierte Entladung von Altschwellen 15 und Beladung von Neuschwellen 16 sinnvoll sein, wenn mehrere Arbeitseinsätze hintereinander erfolgen.

In einer einfachen Variante umfasst das Schwellentransportfahrzeug 1 keine Hebe- und Senkvorrichtung 33. Dann ist vor einem Arbeitseinsatz nur eine Ladeebene 7, 8 mit Paletten 9 beladen, die mit Neuschwellen 15 bestückt sind. Im Zuge des fließbandmäßigen Entladens der Neuschwellen 15 auf der Baustelle wird die andere Ladeebene 8, 7 mit Altschwellen 16 beladen. Anschließend erfolgt ein Transport zu einem Lagerort, wo die Altschwellen 16 abgeladen werden.

In einer weiteren Variante kann das Schwellentransportfahrzeug 1 aus mehreren Fahrzeugeinheiten mit jeweils eigenem Fahrantrieb 24 zusammengesetzt sein. Zwischen solchen Fahrzeugeinheit kann ein Verbindungsgelenkt 32 zur Übertragung von Zugkräften entfallen. Das erhöht die Flexibilität bei der Materiallogistik. Lediglich während einer Palettenbeförderung in den Ladeebenen 7, 8 sind die Fahrzeugeinheiten aneinandergereiht und fahren gemeinsam in Arbeitsrichtung. Dabei sind die Fahrzeugeinheiten über Funkverbindungen aufeinander abgestimmt. Ansonsten sind die Fahrzeugeinheiten separat verfahrbar. in gleicher Geschwindigkeit verfahren lassen. Sobald ein Schwellentransportfahrzeug 1 mit Altschwellen 16 voll beladen ist, könnte dies sich automatisch aus dem Fahrzeugverbund entfernen und gegen ein mit Neuschwellen 15 beladenes Schwellentransportfahrzeug 1 ausgetauscht werden. Dies hätte bei einer Automatisierung eine größere Flexibilität zur Folge und ein Kuppeln wäre nur bei einer Überstellfahrt bzw. Transportfahrt notwendig.

## Patentansprüche

1. Schwellentransportfahrzeug (1), umfassend einen Ladebereich (25), der eine untere tragende Ladeebene (7) und eine obere tragende Ladeebene (8) aufweist, wobei in jeder Ladeebene (7,8) eine Führung (10) angeordnet ist, in der Paletten (9) in Längsrichtung des Schwellentransportfahrzeugs (1) geführt sind, wobei an einer Stirnseite ein Übergabebereich (26) angeordnet ist, in welchen die Führungen (10) hineinragen, um in einem Arbeitseinsatz Paletten (9) mit neuen Schwellen (15) in einer Ladeebene (7,8) an ein stirnseitig angeordnetes weiteres Schwellentransportfahrzeug (1) oder Belade-/Entladefahrzeug (34) weiterzugeben sowie Paletten mit alten Schwellen (16) in der anderen Ladeebene (7,8) aufzunehmen, **dadurch gekennzeichnet, dass** in jeder Ladeebene (7,8) eine Schiebeeinrichtung (11) zum Schieben der Paletten (9) entlang der Führung (10) als zumindest eine in den Übergabebereich hineinragende, umlaufende Kette ausgebildet ist und dass an den Paletten (9) Koppelelemente (20) zur vorübergehenden Kopplung mit der Kette angeordnet sind.

2. Schwellentransportfahrzeug (1) nach Anspruch 1, **dadurch gekennzeichnet, dass** in jeder Ladeebene (7,8) beidseits einer längsverlaufenden Symmetrieachse (19) jeweils eine umlaufende Kette angeordnet ist.

3. Schwellentransportfahrzeug (1) nach Anspruch 1 oder 2, **dadurch gekennzeichnet, dass** die jeweilige Führung (10) als Längsprofil ausgebildet ist und dass an den Palette (9) Führungsrollen (18) zur Führung entlang des Längsprofils angeordnet sind.

4. Schwellentransportfahrzeug (1) nach einem der Ansprüche 1 bis 3, **dadurch gekennzeichnet, dass** jede Palette (9) an ihrer Unterseite Längsauflagen (13) zum Aufliegen auf einem Rollengang (14) umfasst.

5. Schwellentransportfahrzeug (1) nach Anspruch 4, **dadurch gekennzeichnet, dass** in jeder Ladeebene (7,8) eine mittig verlaufende Führung (10) und beidseits dieser Führung (10) jeweils ein Rollengang (14) angeordnet sind.

6. Schwellentransportfahrzeug (1) nach einem der Ansprüche 1 bis 5, **dadurch gekennzeichnet, dass** jeder Palette (9) eine Verriegelungseinrichtung (21) zur vorübergehenden Fixierung während einer Transportfahrt zugeordnet ist.

7. Schwellentransportfahrzeug (1) nach einem der Ansprüche 1 bis 6, **dadurch gekennzeichnet, dass** das Transportfahrzeug (1) einen Wagenrahmen (4) umfasst, der auf Drehgestellen (3) abgestützt ist und dass zumindest ein Drehgestell (3) als Triebdrehgestell ausgebildet ist.

8. Schwellentransportfahrzeug (1) nach einem der Ansprüche 1 bis 7, **dadurch gekennzeichnet, dass** das Transportfahrzeug (1) an beiden Längsseiten Verkleidungselemente (30) aufweist.

9. Schwellentransportfahrzeug (1) nach einem der Ansprüche 1 bis 8, **dadurch gekennzeichnet, dass** das Transportfahrzeug (1) oberhalb der oberen Ladeebene (8) eine tragende Förderebene aufweist, in der zumindest ein Längsförderband (22) zum Transport von Schüttgut angeordnet ist.

10. Schwellentransportfahrzeug (1) nach einem der Ansprüche 1 bis 9, **dadurch gekennzeichnet, dass** an der dem Übergabebereich (26) gegenüberliegenden Stirnseite eine Hebe-/Senkvorrichtung (33) zum Heben bzw. Senken einer Palette (9) von einer Ladeebene (7,8) in die andere Ladeebene (7,8) angeordnet ist.

11. Schwellentransportfahrzeug (1) nach einem der Ansprüche 1 bis 10, **dadurch gekennzeichnet, dass** das Transportfahrzeug (1) wenigstens zwei Wagenrahmen (4) umfasst, die gelenkig miteinander verbunden sind, dass jedem Wagenrahmen (4) ein eigener Ladebereich (25) zugeordnet ist und dass die Ladebereiche (25) mit einem Übergabebereich (26) gekoppelt sind, in welchen die jeweiligen Führungen (10) und die jeweiligen Schiebeeinrichtungen (11) hineinragen, um die Paletten (9) über beide Ladebereiche (25) hinweg in Längsrichtung weiterzuschieben.

12. Verfahren zur Bereitstellung neuer Schwellen (15) bzw. zur Aufnahme alter Schwellen (16) mittels eines Schwellentransportfahrzeugs (1) nach einem der Ansprüche 1 bis 11, **dadurch gekennzeichnet, dass** im Übergabebereich (26) die in der einen Ladeebene (7,8) weitergeschobenen Paletten (9) mit neuen Schwellen (15) vom Schwellentransportfahrzeug (1) an das Belade-/Entladefahrzeug übergeben werden und dass in der anderen Ladeebene (7,8) Paletten (9) mit alten Schwellen (16) vom Belade-/Entladefahrzeug (34) an das Schwellentransportfahrzeug (1) übergeben werden.

13. Verfahren nach Anspruch 12, **dadurch gekennzeichnet, dass** mittels einer an der dem Übergabebereich (26) gegenüberliegenden Stirnseite angeordneten Hebe-/Senkvorrichtung Paletten (9) von einer Ladeebene (7,8) in die andere Ladeebene (7,8) gehoben bzw. abgesenkt werden.

14. Verfahren nach Anspruch 12 oder 13, **dadurch gekennzeichnet, dass** das Schwellentransportfahrzeug (1) während einer Palettenübergabe gemeinsam mit dem Belade-/Entladefahrzeug (34) mit einer vorgegebenen Arbeitsgeschwindigkeit entlang eines Gleises (2) bewegt wird, dessen Schwellen (15,16) mittels einer Schellentauschvorrichtung getauscht werden.

## Claims

1. A sleeper transport vehicle (1) having a loading area (25) which includes a lower supporting loading plane (7) and an upper supporting loading plane (8), wherein in each loading plane (7,8) a guide (10) is arranged in which pallets (9) are guided in the longitudinal direction of the sleeper transport vehicle (1), wherein, at a front side, a transfer area (26) is arranged into which the guides (10) protrude in order to pass along during a working operation pallets (9) with new sleepers (15) in one loading plane (7,8) to a further sleeper transport vehicle (1) or loading/unloading vehicle (34) arranged at the front side, and to receive pallets with old sleepers (16) in the other loading plane (7,8), **characterized in that** in each loading plane (7,8) a pushing device (11) for pushing the pallets (9) along the guide (10) is designed as at least one circulating chain protruding into the transfer area, and that coupling elements (20) are arranged on the pallets (9) for temporary coupling to the chain.

2. A sleeper transport vehicle (1) according to claim 1, **characterized in that** in each loading plane (7,8) a respective circulating chain is arranged at both sides of a longitudinally extending axis of symmetry (19).

3. A sleeper transport vehicle (1) according to claim 1 or 2, **characterized in that** the respective guide (10) is designed as a longitudinal profile, and that guide rollers (18) for guiding along the longitudinal profile are arranged on the pallets (9).

4. A sleeper transport vehicle (1) according to one of claims 1 to 3, **characterized in that** each pallet (9) has at its underside longitudinal supports (13) for placement on a rollerway (14).

5. A sleeper transport vehicle (1) according to claim 4, **characterized in that** a centrally extending guide (10) and, at either side of said guide (10), a respective rollerway (14) are arranged in each loading plane (7,8).

6. A sleeper transport vehicle (1) according to one of claims 1 to 5, **characterized in that** a locking device (21) for temporary fixation during transport travel is associated with each pallet (9).

7. A sleeper transport vehicle (1) according to one of claims 1 to 6, **characterized in that** the transport vehicle (1) comprises a wagon frame (4) which is supported on bogies (3), and that at least one bogie (3) is configured as a motor bogie.

8. A sleeper transport vehicle (1) according to one of claims 1 to 7, **characterized in that** the transport vehicle (1) has panelling elements (30) at both longitudinal sides.

9. A sleeper transport vehicle (1) according to one of claims 1 to 8, **characterized in that**, above the upper loading plane (8), the transport vehicle (1) has a supporting conveying plane in which at least one longitudinal conveyor belt (22) for transport of bulk material is arranged.

10. A sleeper transport vehicle (1) according to one of claims 1 to 9, **characterized in that** a lifting/lowering device (33) for lifting or lowering a pallet (9) from one loading plane (7,8) to the other loading plane (7,8) is arranged at the front side lying opposite to the transfer area (26).

11. A sleeper transport vehicle (1) according to one of claims 1 to 10, **characterized in that** the transport vehicle (1) comprises at least two wagon frames (4) which are articulatedly connected to one another, that a separate loading area (25) is associated with each wagon frame (4), and that the loading areas (25) are coupled to a transfer area (26) into which the respective guides (10) and the respective pushing devices (11) protrude in order to push the pallets (9) onward in the longitudinal direction across both loading areas (25).

12. A method for supplying new sleepers (15) or for taking up old sleepers (16) by means of a sleeper transport vehicle (1) according to one of claims 1 to 11, **characterized in that** the pallets (9) with new sleepers (15), which have been pushed onward in the one loading area (7,8), are passed from the sleeper transport vehicle (1) to the loading/unloading vehicle in the transfer area (26), and that in the other loading plane (7,8) pallets (9) with old sleepers (16) are passed from the loading/unloading vehicle (34) to the sleeper transport vehicle (1).

13. A method according to claim 12, **characterized in that** pallets (9) are lifted or lowered from one loading plane (7,8) to the other loading plane (7,8) by means of a lifting/lowering device arranged at the front side lying opposite the transfer area (26).

14. A method according to claim 12 or 13, **characterized in that**, during a pallet transfer, the sleeper transport vehicle (1) is moved together with the loading/unloading vehicle (34) with a pre-set working speed along a track (2), the sleepers (15,16) of which are exchanged by means of a sleeper changing device.

## Revendications

1. Véhicule de transport de traverses (1), comprenant une région de chargement (25) qui présente un plan de chargement porteur inférieur (7) et un plan de chargement porteur supérieur (8), dans lequel un guide (10) dans lequel des palettes (9) sont guidées dans la direction longitudinale du véhicule de transport de traverses (1) est disposé dans chaque plan de chargement (7, 8), dans lequel une région de transfert (26) dans laquelle les guides (10) avancent est disposée sur un côté frontal pour transmettre lors d'un déploiement des palettes (9) avec de nouvelles traverses (15) dans un plan de chargement (7, 8) à un autre véhicule de transport de traverses (1) ou un véhicule de chargement/déchargement (34) disposé côté frontal ainsi que recevoir des palettes avec d'anciennes traverses (16) dans l'autre plan de chargement (7, 8), **caractérisé en ce qu'**un dispositif de coulissement (11) pour le coulissement des palettes (9) le long du guide (10) est réalisé dans chaque plan de chargement (7, 8) en tant qu'au moins une chaîne circulante, avançant dans la région de transfert, et que des éléments de couplage (20) sont disposés sur les palettes (9) pour le couplage transitoire à la chaîne.

2. Véhicule de transport de traverses (1) selon la revendication 1, **caractérisé en ce qu'**une chaîne circulante est à chaque fois disposée dans chaque plan de chargement (7, 8) des deux côtés d'un axe de symétrie longitudinal (19).

3. Véhicule de transport de traverses (1) selon la revendication 1 ou 2, **caractérisé en ce que** le guide respectif (10) est réalisé en tant que profilé longitudinal et que des rouleaux de guidage (18) pour le guidage le long du profilé longitudinal sont disposés sur la palette (9).

4. Véhicule de transport de traverses (1) selon une des revendications 1 à 3, **caractérisé en ce que** chaque palette (9) comprend sur son côté inférieur des appuis longitudinaux (13) pour l'appui sur un transporteur à rouleaux (14).

5. Véhicule de transport de traverses (1) selon la revendication 4, **caractérisé en ce qu'**un guide s'étendant au milieu (10) est disposé dans chaque plan de chargement (7, 8) et un transporteur à rouleaux (14) est à chaque fois disposé des deux côtés de ce guide (10).

6. Véhicule de transport de traverses (1) selon une des revendications 1 à 5, **caractérisé en ce qu'**un dispositif de verrouillage (21) pour la fixation transitoire pendant un trajet de transport est associé à chaque palette (9).

7. Véhicule de transport de traverses (1) selon une des revendications 1 à 6, **caractérisé en ce que** le véhicule de transport (1) comprend un châssis de wagon (4) qui est appuyé sur des bogies (3) et qu'au moins un bogie (3) est réalisé en tant que bogie moteur.

8. Véhicule de transport de traverses (1) selon une des revendications 1 à 7, **caractérisé en ce que** le véhicule de transport (1) présente des éléments de panneautage (30) sur les deux côtés longitudinaux.

9. Véhicule de transport de traverses (1) selon une des revendications 1 à 8, **caractérisé en ce que** le véhicule de transport (1) présente au-dessus du plan de chargement supérieur (8) un plan de transport porteur dans lequel au moins une bande transporteuse longitudinale (22) est disposée pour le transport de marchandise en vrac.

10. Véhicule de transport de traverses (1) selon une des revendications 1 à 9, **caractérisé en ce qu'**un dispositif de levage/abaissement (33) pour le levage ou l'abaissement d'une palette (9) d'un plan de chargement (7, 8) dans l'autre plan de chargement (7, 8) est disposé sur le côté frontal opposé à la région de transfert (26).

11. Véhicule de transport de traverses (1) selon une des revendications 1 à 10, **caractérisé en ce que** le véhicule de transport (1) comprend au moins deux châssis de wagon (4) qui sont connectés l'un à l'autre de manière articulée, qu'une région de chargement propre (25) est associée à chaque châssis de wagon (4) et que les régions de chargement (25) sont couplées à une région de transfert (26) dans laquelle les guides respectifs (10) et les dispositifs de coulissement respectifs (11) avancent pour faire coulisser plus loin en direction longitudinale les palettes (9) par-dessus les deux régions de chargement (25).

12. Procédé de mise à disposition de nouvelles traverses (15) ou de réception d'anciennes traverses (16) au moyen d'un véhicule de transport de traverses (1) selon une des revendications 1 à 11, **caractérisé en ce que** les palettes (9) coulissées plus loin dans un des plans de chargement (7, 8) avec de nouvelles traverses (15) sont transférées du véhicule de transport de traverses (1) au véhicule de chargement/déchargement dans la région de transfert (26) et que des palettes (9) avec d'anciennes traverses (16) sont transférées du véhicule de chargement/déchargement (34) au véhicule de transport de traverses (1) dans l'autre plan de chargement (7, 8).

13. Procédé selon la revendication 12, **caractérisé en ce que** des palettes (9) sont levées ou abaissées d'un plan de chargement (7, 8) dans l'autre plan de chargement (7, 8) au moyen d'un dispositif de levage/abaissement disposé sur le côté frontal opposé à la région de transfert (26).

14. Procédé selon la revendication 12 ou 13, **caractérisé en ce que** le véhicule de transport de traverses (1) est déplacé pendant un transfert de palettes conjointement au véhicule de chargement/déchargement (34) avec une vitesse de travail prédéfinie le long d'une voie ferrée (2) dont les traverses (15, 16) sont échangées au moyen d'un dispositif d'échange de traverses.
